# EUROPEAN PATENT APPLICATION

(11) **EP 4 734 028 A1**
(43) Date of publication of application: **29.04.2026**
(21) Application number: 25197752.6
(22) Date of filing: 22.08.2025
(51) Int. Cl.: G06Q 20/32

(54) **A MERCHANT PRESENTED PAYMENT ACCEPTANCE CREDENTIAL (MPPAC) AUDIT VERIFICATION SYSTEM AND METHOD THEREFOR**

(30) Priority: 24.10.2024 US 202418925975
(71) Applicant: Visa International Service Association, San Francisco, California 94128 (US)
(72) Inventor: CHEN, Yuexi, Foster City, California 94404 (US)
(74) Representative: EIP

(57) **Abstract**

In some embodiments, a system, includes a processor; and a non-transitory computer readable medium coupled to the processor, the non-transitory computer readable medium including code that: generates, at a payment network, a payment-network-generated Merchant Presented Payment Acceptance Credential (MPPAC), the payment-network-generated MPPAC being configured to be utilized in a merchant MPPAC audit of a merchant; provides the payment-network-generated MPPAC to the merchant for use in the merchant MPPAC audit; receives, at the payment network, a merchant-captured MPPAC, the merchant-captured MPPAC having been captured by the merchant for a merchant MPPAC audit verification; and utilizes, at the payment network, the payment-network-generated MPPAC and the merchant-captured MPPAC to perform the merchant MPPAC audit verification.

## Description

### BACKGROUND

The background description provided herein is for the purpose of generally presenting the context of the disclosure. Work of the presently named inventor(s), to the extent it is described in this background section, as well as aspects of the description that may not otherwise qualify as prior art at the time of filing, are neither expressly nor impliedly admitted as prior art against the present disclosure.

A Merchant Presented Payment Acceptance Credential (MPPAC) generally refers to a digital credential used in the context of electronic payments in mobile and online transactions. Use of an MPPAC in payment transactions allows merchants to present payment acceptance capabilities to customers. An MPPAC is generally presented by a merchant during a financial transaction and captured by the consumer to make a payment using the captured digital credential. Examples of MPPACs include, for example, a Merchant-Presented Quick Response (MPQR) and a NFC Data Exchange Format (NDEF) Message. MPQR generally refers to a type of QR code used in payment systems where the merchant generates a QR code that the customer scans with a mobile device to initiate a payment. An NDEF Message generally refers to a standardized data format used in Near Field Communication (NFC) technology to exchange payment-related information between NFC-enabled devices or between an NFC device and an NFC tag. These types of MPPACs are subject to tampering by, for example, covering a legitimate MPQR with a different MPQR which contains a fraudulent credential (pointing to a URL for phishing expeditions or malicious websites), or replacing a legitimate NDEF tag with a fraudulent NDEF tag. As such, a need exists to provide systems that prevent fraudulant payment transactions from occuring and improve security and reliability as part of the payment process.

### BRIEF DESCRIPTION OF THE DRAWINGS

FIG. 1 illustrates a block diagram of a system in accordance with some embodiments.
FIG. 2 illustrates a block diagram of a merchant Merchant Presented Payment Acceptance Credential (MPPAC) audit verification system in a payment network communicatively coupled to a customer smartphone and/or merchant smart phone in accordance with some embodiments.
FIG. 3 illustrates a block diagram of the merchant MPPAC audit verication system of FIG. 2 in accordance with some embodiments.
FIG. 4 is a flow diagram illustrating a merchant MPPAC audit verification method in accordance with some embodiments.

### DETAILED DESCRIPTION

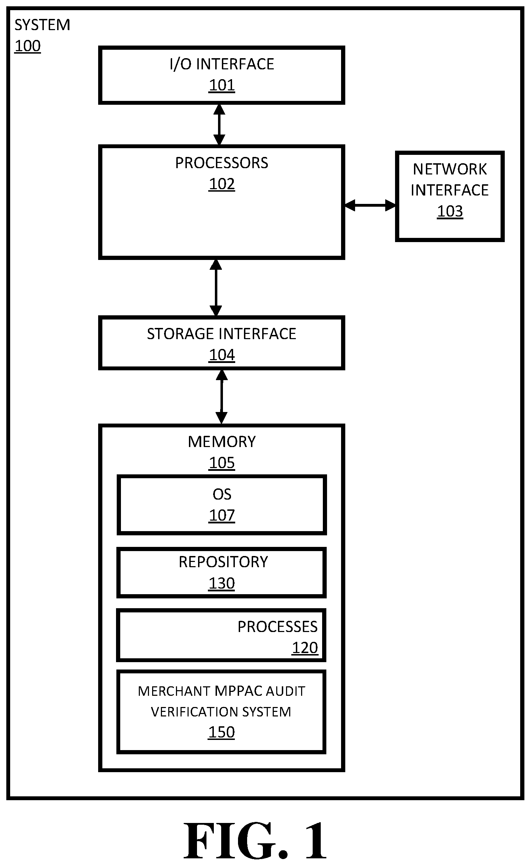

FIG. 1 illustrates a block diagram of an exemplary system 100 for implementing embodiments consistent with the present disclosure. In some nonlimiting embodiments or aspects, the system 100 may utilize a merchant Merchant Presented Payment Acceptance Credential (MPPAC) audit verication system 150 to implement a method for performing a merchant MPPAC audit verification of a merchant, described further herein. In some embodiments, in order to prevent a customer from utilizing a fraudulent MPPAC displayed on MPPAC display by a nefarious actor or actors, system 100 of a payment network utilizes merchant MPPAC audit verification system 150 to verify that merchant has performed an MPPAC audit, as described further in detail herein. In some embodiments, the processor/s 102 may comprise at least one data processors for executing program components for dynamic resource allocation at run time. The processors 102 may include specialized processing units such as integrated system (bus) controllers, memory management control units, floating point units, graphics processing units, digital signal processing units, etc.

In some embodiments, the processors 102 may be disposed in communication with one or more input/output (I/O) devices (not shown) via an I/O interface 101. The I/O interface 101 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMi), RF antennas, S-Video, VGA, IEEE 802.1 n /b/g/n/x, Bluetooth^{®}, cellular (e.g., code-division multiple access (CDMA), high-speed packet access (HSPA+), global system for mobile communications (GSM), long-term evolution (LTE), WiMax^{®}, or the like), etc.

In some embodiments, using the I/O interface 101, the system 100 may communicate with one or more I/O devices. For example, an input device 110 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. An output device 111 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processors 102 may be disposed in communication with a communication network via a network interface 103. The network interface 103 may communicate with the communication network. The network interface 103 may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network may include, without limitation, a direct interconnection, e-commerce network, a peer to peer (P2P) network, local area network (LAN), wide area network (WAN), wireless network (e.g., using Wireless Application Protocol), the internet, Wi-Fi^{®}, etc. Using the network interface 103 and the communication network, the system 100 may communicate with the one or more service operators or other computers, or customer smartphone 230 and/or merchant smartphone 240, described further herein.

In some non-limiting embodiments or aspects, the processors 102 may be disposed in communication with a memory 105 (e.g., RAM, ROM, etc.) via a storage interface 104. In some embodiments, the storage interface 104 may connect to memory 105 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems interface (SCSI), etc. The memory drives may further include a drum, magnetic disc drive, magneto-optical drive, optical drive, Redundant Array of Independent Discs (RAID), solid-state memory devices, solid- state drives, etc.

In some embodiments, memory 105 may store a collection of program or database components, including, without limitation, a user interface, an operating system 107, a data repository 130, a web server, processes 120, merchant MPPAC audit verification system 150, etc., described further in detail herein. In some non-limiting embodiments or aspects, the system 100 may store user/application data, such as the data, variables, records, customer data, merchant data, customer smartphone data, merchant smarthpone data, MPPAC data, merchant MPPAC audit verification data, customer-based MPPAC audit data, etc. as described in this disclosure. Such databases may be implemented as fault-tolerant, relational, scalable, secure databases such as Oracle or Sybase and/or a non-relational base, such as NoSQL.

In some embodiments, the operating system 107 may facilitate resource management and operation of the system 100. Examples of operating systems include, without limitation, APPLE^{®} MACINTOSH^{®} OS X^{®}, UNIX^{®}, UNIX-like system distributions (E.G., BERKELEY SOFTWARE DISTRIBUTION^{®} (BSD), FREEBSD^{®}, NETBSD^{®}, OPENBSD, etc.), LINUX^{®} DISTRIBUTIONS (E.G., RED HAT^{®}, UBUNTU^{®}, KUBUNTU^{®}, etc.), IBM^{®}OS/2^{®}, MICROSOFT^{®} WINDOWS^{®} (XP^{®}, VISTA^{®}/7/8, 10 etc.), APPLE^{®} OS^{®}, GOOGLE^{™} ANDROID^{™}, or the like.

In some non-limiting embodiments or aspects, the system 100 may implement a web browser (not shown in the figures) stored program component. The web browser (not shown in the figures) may be a hypertext viewing application, such as MICROSOFT^{®} INTERNET EXPLORER^{®}, GOOGLE^{™} CHROME^{™}, MOZILLA^{®} FIREFOX^{®}, APPLE^{®} SAFARI^{®}, etc. Secure web browsing may be provided using Secure Hypertext Transport Protocol (HTTPS), Secure Sockets Layer (SSL), Transport Layer Security (TLS), etc. Web browsers may utilize facilities such as AJAX, DHTML, ADOBE^{®} FLASH^{®}, JAVASCRIPT^{®}, JAVA^{®}, Application Programming Interfaces (APIs), etc.

Furthermore, one or more computer-readable storage media may be utilized in implementing embodiments consistent with the present disclosure. In some embodiments, a computer- readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, e.g., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

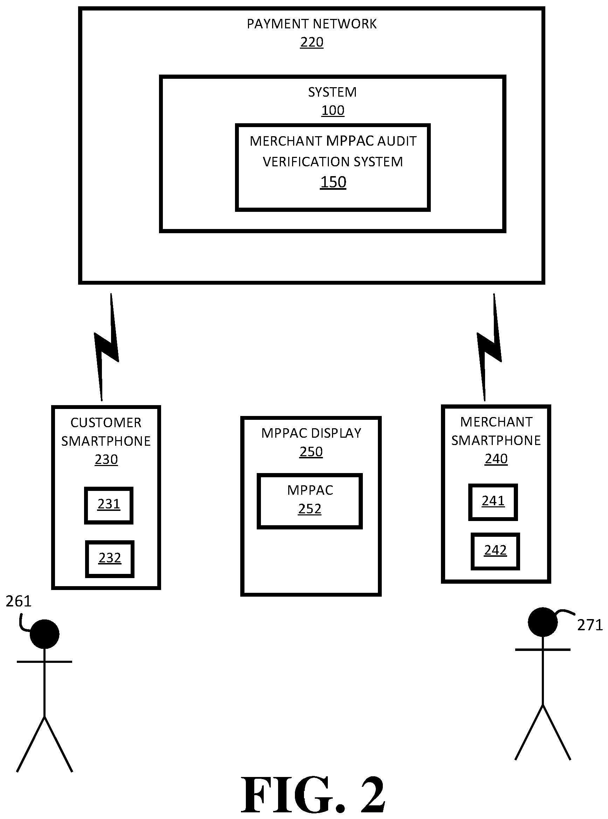

FIG. 2 illustrates a block diagram of a merchant MPPAC audit verification system 150 in payment network 220 that is communicatively coupled to a merchant smartphone 240 of merchant 271 and a customer smartphone 230 of customer 261 to prevent fraudulent MPPAC-based payment transactions in accordance with some embodiments. In some embodiments, payment network 220 is configured to utilize merchant MPPAC audit verification system 150 in system 100 to perform a merchant MPPAC audit verification of merchant 271 for merchant 271 and a customer-based MPPAC audit of MPPAC 252 displayed on MPPAC display 250 for customer 261. In some embodiments, MPPAC display 250 is a physical or electronic display that is configured to be utilized by merchant 271 to display an MPPAC generated by merchant MPPAC audit verification system 150 of payment network 220. In some embodiments, customer smartphone 230 is a smartphone associated with customer 261 that is configured to scan MPPAC 252 or capture a photo of MPPAC 252 or a location of MPPAC display 250 for use by merchant MPPAC audit verification system 150 of payment network 220, as described further in detail herein. In some embodiments, merchant smartphone 240 is a smartphone associated with merchant 271 that is configured to scan MPPAC 252 or capture a photo of MPPAC 252 or a location of merchant 271 for use by merchant MPPAC audit verification system 150 of payment network 220, as described further in detail herein. In some embodiments, MPPAC 252 is an MPPAC displayed on MPPAC display 250. In some embodiments, merchant-captured MPPAC 241 is an MPPAC captured by merchant 271 from MPPAC display 250 for auditing and verification purposes by merchant MPPAC audit verification system 150 using merchant smartphone 240. In some embodiments, customer-captured MPPAC 231 is an MPPAC captured by customer 261 from MPPAC display 250 using customer smartphone 230. In some embodiments, payment network 220 may also be communicatively coupled to MPPAC display 250 when, for example, MPPAC display 250 is a digital or electronic display. In some embodiments, payment network 220 utilizes merchant MPPAC audit verification system 150 of system 100 to perform the merchant MPPAC audit verification to prevent a fraudulent MPPAC from being utilized by customer 261 to conduct an MPPAC-based payment transaction associated with merchant 271, as described further in detail herein.

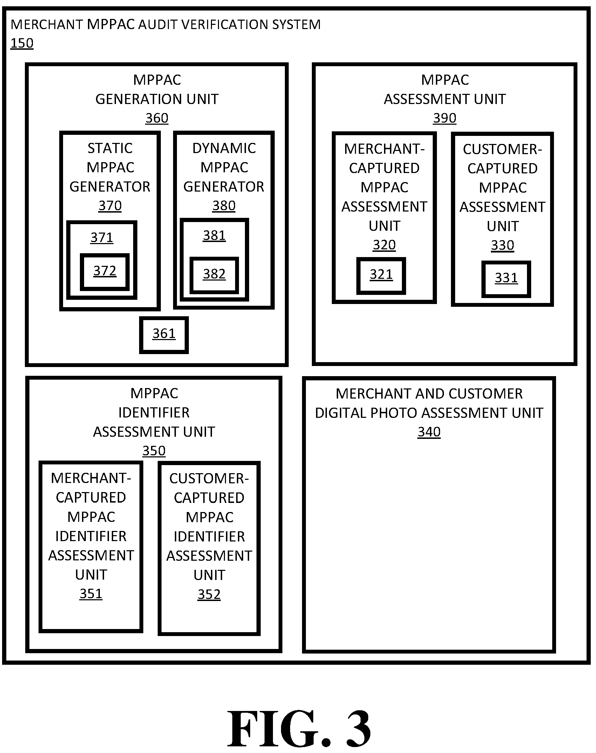

FIG. 3 illustrates a block diagram of merchant MPPAC audit verification system 150 in accordance with some embodiments. In some embodiments, merchant MPPAC audit verification system 150 is executable code and/or equivalent hardware configured to perform a merchant MPPAC audit verification of merchant 271 and a customer-based MPPAC verification of an MPPAC displayed by merchant 271 for customer 261. In some embodiments, a merchant MPPAC audit verification is a verification of merchant 271 to ensure that merchant 271 has performed an audit of an MPPAC displayed by merchant 271 on MPPAC display 250 to prevent fraudulent use of the MPPAC displayed by merchant 271. In some embodiments, customer-based MPPAC verification is a verification of an MPPAC displayed on MPPAC display 250 utilizing an MPPAC that is configured to ensure that the MPPAC captured by customer 261 is a valid MPPAC. In some embodiments, merchant MPPAC audit verification system 150 includes an MPPAC generation unit 360, an MPPAC assessment unit 390, a merchant and customer digital photo assessment unit 340, and an MPPAC identifier assessment unit 350. **In** some embodiments, MPPAC assessment unit 390 includes a merchant-captured MPPAC assessment unit 320 and a customer-captured MPPAC assessment unit 330. **In** some embodiments, MPPAC generation unit 360 includes a static MPPAC generator 370 and a dynamic MPPAC generator 380. **In** some embodiments, MPPAC identifier assessment unit 350 includes a merchant-captured MPPAC identifier assessment unit 351 and a customer-captured MPPAC identifier assessment unit 352. **In** some embodiments, merchant MPPAC audit verification system 150 utilizes MPPAC generation unit 360, MPPAC assessment unit 390, merchant and customer digital photo assessment unit 340, and/or MPPAC identifier assessment unit 350 to perform the merchant MPPAC audit verification of merchant 271 and/or the customer-based MPPAC verification, as described further herein.

**In** some embodiments, in operation, merchant MPPAC audit verification system 150 of payment network 220 generates MPPAC 361 utilizing MPPAC generation unit 360. **In** some embodiments, MPPAC 361 is an MPPAC generated by MPPAC generation unit 360 that, in addition to being configured to be utilized to perform traditional MPPAC transactions, is configured to be utilized by merchant MPPAC audit verification system 150 to perform the merchant MPPAC audit verification of merchant 271 and a customer-based MPPAC verification of an MPPAC displayed for customer 261 on MPPAC display 250. **In** some embodiments, MPPAC generation unit 360 is executable code configured to utilize a static MPPAC generator 370 or a dynamic MPPAC generator 380 to generate MPPAC 361 for use by payment network 220 to perform the merchant MPPAC audit verification of merchant 271 and/or customer-based MPPAC verification. In some embodiments, MPPAC 361 generated by MPPAC generation unit 360 may be either a static MPPAC 371 or a dynamic MPPAC 381. In some embodiments, static MPPAC generator 370 is executable code configured to generate static MPPAC 371. In some embodiments, static MPPAC 371 is a static MPPAC that is configured to be utilized by merchant MPPAC audit verification system 150 to perform the merchant MPPAC audit verification and the customer-based MPPAC verification. In some embodiments, static MPPAC generator 370 generates a static MPPAC 371 by configuring predefined payment network settings, merchant account details, transaction parameters, and security credentials into a fixed account structure for payment processing. In some embodiments, static MPPAC 371 is configured to include a merchant audit static MPPAC identifier 372. In some embodiments, merchant audit static MPPAC identifier 372 is an MPPAC identifier in static MPPAC 371 that is specifically configured to be utilized to perform the merchant MPPAC audit verification of merchant 271 and/or the customer-based MPPAC verification.

In some embodiments, dynamic MPPAC generator 380 is executable code configured to generate dynamic MPPAC 381. In some embodiments, dynamic MPPAC 381 is a dynamic MPPAC that is configured to be utilized by merchant MPPAC audit verification system 150 to perform the merchant MPPAC audit verification and the customer-based MPPAC verification. In some embodiments, dynamic MPPAC 381 is configured to include a merchant audit dynamic MPPAC identifier 382. In some embodiments, merchant audit dynamic MPPAC identifier 382 is an MPPAC identifier in dynamic MPPAC 381 that is specifically configured to be utilized to perform the merchant MPPAC audit verification of merchant 271 and the customer-based MPPAC verification. In some embodiments, dynamic MPPAC generator 380 generates dynamic MPPAC 381 by, for example, preparing input data and performing a serial-number-based concatenation (e.g., Serial Number('900000001234') ∥ Increment Only Counter ('00000050') ∥ Seed ('0123456789ABCDEF')), executing a one-way function on the input data, such as, for example, SHA256('900000001234000000500123456789ABCDEF') = 'ad2a3335ecc5175f55e337ee704004d84a7f099c6a8dc8d9195e2e6acdb44323'), encoding the input data (without the seed) and one way function result, and using base64 encoding (e.g., BASE64Encode('90000000123400000050 ad2a3335ecc5175f55e337ee704004d84a7f099c6a8dc8d9195e2e6acdb44323') = kAAAABI0AAAAUK0qMzXsxRdfVeM37nBABNhKfwmcao3I2RleLmrNtEMj), and creating MPPAC using previous output, such as, for example, https://vi.sa/pay?ref= kAAAABI0AAAAUK0qMzXsxRdfVeM37nBABNhKfwmcao3I2RleLmrNtEMj. In some embodiments, after dynamic MPPAC 381 or static MPPAC 371 is generated as MPPAC 361 by MPPAC generation unit 360, MPPAC generation unit 360 provides MPPAC 361 to merchant smartphone 240 associated with merchant 271.

In some embodiments, merchant smartphone 240, associated with merchant 271, receives MPPAC 361 from merchant MPPAC audit verification system 150 that is utilized by merchant 271 for display on, for example, MPPAC display 250 as MPPAC 252. In some embodiments, merchant 271 displays MPPAC 361 on MPPAC display 250 such that customer 261 is able to scan MPPAC 361 to conduct financial, payment, or other MPPAC-based transactions. In some embodiments, an MPPAC-based transaction is a financial or other type of transaction that is based on the MPPAC displayed by merchant 271 on MPPAC display 250, which may be, for example, MPPAC 361 displayed as MPPAC 252. In some embodiments, after displaying MPPAC 361 on MPPAC display 250, merchant 271 captures the displayed MPPAC 252 as merchant-captured MPPAC 241 utilizing merchant smartphone 240. In some embodiments, as stated previously, merchant-captured MPPAC 241 is an MPPAC (such as, for example, MPPAC 252) ascertained or captured by merchant 271 via an MPPAC display (e.g., MPPAC display 250) for auditing and verification purposes by merchant MPPAC audit verification system 150. In some embodiments, merchant-captured MPPAC 241 is ascertained by merchant 271 utilizing, for example, a camera located on merchant smartphone 240. In some embodiments, after capturing the displayed MPPAC 252 as merchant-captured MPPAC 241, merchant 271 provides merchant-captured MPPAC 241 to merchant MPPAC audit verification system 150 of payment network 220 via merchant smartphone 240.

In some embodiments, merchant-captured MPPAC assessment unit 320 of MPPAC assessment unit 390 receives merchant-captured MPPAC 241 from merchant 271 via merchant smartphone 240. In some embodiments, MPPAC assessment unit 390 may receive merchant-captured MPPAC 241 from another device, such as, for example, a laptop or satellite system that is configured to capture, ascertain, and/or deliver merchant-captured MPPAC 241. In some embodiments, MPPAC assessment unit 390 is executable code configured to utilize merchant-captured MPPAC assessment unit 320 or customer-captured MPPAC assessment unit 330 to perform an MPPAC assessment of merchant-captured MPPAC 241 received from merchant 271 via merchant smartphone 240 or customer-captured MPPAC 231 received from customer 261 via customer smartphone 230, respectively. In some embodiments, the MPPAC assessment performed by MPPAC assessment unit 390 is an assessment (either a merchant-captured MPPAC assessment or customer-captured MPPAC assessment) of an MPPAC (e.g., a merchant-captured MPPAC 241 and/or customer-captured MPPAC 231) that is configured to identify and ascertain an MPPAC identifier (either a merchant-captured MPPAC identifier 321 and/or customer-captured MPPAC identifier 331) from the MPPAC received from merchant smartphone 240 and/ or customer smartphone 230, described further herein.

In some embodiments, as stated previously, merchant-captured MPPAC assessment unit 320 receives merchant-captured MPPAC 241 from merchant smartphone 240. In some embodiments, merchant-captured MPPAC assessment unit 320 is executable code configured to perform a merchant-captured MPPAC assessment of merchant-captured MPPAC 241. In some embodiments, the merchant-captured MPPAC assessment is an assessment of merchant-captured MPPAC 241 that is configured to identify and ascertain a merchant-captured MPPAC identifier 321 from merchant-captured MPPAC 241. In some embodiments, merchant-captured MPPAC identifier 321 is an MPPAC identifier associated with merchant-captured MPPAC 241 that is utilized by merchant MPPAC audit verification system 150 to determine if merchant 271 associated with the merchant-captured MPPAC 241 has performed an an audit of the MPPAC displayed on MPPAC display 250 by merchant 271 for use by customer 261. In some embodiments, merchant-captured MPPAC identifier 321 is may be, for example, a merchant-captured MPPAC URL or merchant-captured MPPAC string associated with merchant-captured MPPAC 241. In some embodiments, merchant-captured MPPAC assessment unit 320 performs the merchant-captured MPPAC assessment by scanning merchant-captured MPPAC 241 and identifying and ascertaining the merchant-captured MPPAC identifier 321 from the merchant-captured MPPAC 241. In some embodiments, after ascertaining the merchant-captured MPPAC identifier, merchant-captured MPPAC assessment unit 320 provides merchant-captured MPPAC identifier 321 to MPPAC identifier assessment unit 350.

In some embodiments, merchant-captured MPPAC identifier assessment unit 351 of MPPAC identifier assessment unit 350 receives merchant-captured MPPAC identifier 321 from MPPAC assessment unit 390. In some embodiments, MPPAC identifier assessment unit 350 is executable code configured to perform an MPPAC identifier assessment of MPPAC identifier associated with either merchant-captured MPPAC 241 or customer-captured MPPAC 231. In some embodiments, MPPAC identifier assessment unit 350 utilizes either merchant-captured MPPAC identifier assessment unit 351 or customer-captured MPPAC identifier assessment unit 352 to perform the MPPAC identifier assessment. In some embodiments, merchant-captured MPPAC identifier assessment unit 351 is executable code configured to perform a merchant-captured MPPAC identifier assessment of merchant-captured MPPAC identifier 321 associated with merchant-captured MPPAC 241. In some embodiments, merchant-captured MPPAC identifier assessment unit 351 of MPPAC identifier assessment unit 350 performs the merchant-captured MPPAC identifier assessment by comparing the merchant-captured MPPAC identifier 321 provided from merchant-captured MPPAC assessment unit 320 to merchant audit dynamic MPPAC identifier 382 generated at MPPAC generation unit 360. In some embodiments, when merchant-captured MPPAC identifier assessment unit 351 determines that merchant-captured MPPAC identifier 321 matches with merchant audit dynamic MPPAC identifier 382, merchant MPPAC audit verification system 150 provides a notification to merchant 271 via merchant smartphone 240 indicating that MPPAC 252 is a valid MPPAC (e.g., a non-fraudulent MPPAC) and does not require replacement. In some embodiments, when MPPAC identifier assessment unit 350 determines that merchant-captured MPPAC identifier 321 does not match with merchant audit dynamic MPPAC identifier 382, merchant MPPAC audit verification system 150 provides a notification to merchant 271 via merchant smartphone 240 indicating that MPPAC 252 is not a valid MPPAC and should be replaced to prevent a fraudulent MPPAC-based transaction. In some embodiments, MPPAC 252 may be replaced with MPPAC 361 or a new MPPAC generated by merchant MPPAC audit verification system 150. In some embodiments, merchant MPPAC audit verification system 150 provides a notification to merchant 271 to perform a confirmation verification of MPPAC 252 displayed on MPPAC display 250 and provide merchant MPPAC audit verification system 150 with an additional merchant-captured MPPAC 241. In some embodiments, merchant MPPAC audit verification system 150 receives the merchant-captured MPPAC 241 and repeats the merchant MPPAC audit verification until the merchant-captured MPPAC 241 is validated.

In some embodiments, with reference to customer-captured MPPAC assessment unit 330, customer-captured MPPAC assessment unit 330 of merchant MPPAC audit verification system 150 receives customer-captured MPPAC 231 from customer smartphone 230. In some embodiments, customer-captured MPPAC assessment unit 330 is executable code configured to perform a customer-captured MPPAC assessment of customer-captured MPPAC 231. In some embodiments, the customer-captured MPPAC assessment is an assessment of customer-captured MPPAC 231 that is configured to identify and ascertain a customer-captured MPPAC identifier 331 from customer-captured MPPAC 231. In some embodiments, customer-captured MPPAC assessment unit 330 performs the customer-captured MPPAC assessment by scanning customer-captured MPPAC 231 and identifying and ascertaining the customer-captured MPPAC identifier 331. In some embodiments, the customer-captured MPPAC identifier 331 is an MPPAC identifier in customer-captured MPPAC 231 that is used by, for example, payment network 220, to identify customer-captured MPPAC 231 for a customer-based MPPAC verification of customer-captured MPPAC 231. In some embodiments, customer-captured MPPAC identifier 331 may be, for example, a customer-captured MPPAC URL or customer-captured MPPAC string associated with customer-captured MPPAC 231 that is configured to be utilized to perform a customer-based MPPAC verification of customer-capture MPPAC 231. In some embodiments, after ascertaining the customer-captured MPPAC identifier 331, customer-captured MPPAC assessment unit 330 provides the customer-captured MPPAC identifier 331 to MPPAC identifier assessment unit 350.

In some embodiments, customer-captured MPPAC identifier assessment unit 352 of MPPAC identifier assessment unit 350 receives customer-captured MPPAC identifier 331 from MPPAC assessment unit 390. In some embodiments, customer-captured MPPAC identifier assessment unit 352 is executable code configured to perform a customer-captured MPPAC identifier assessment of customer-captured MPPAC identifier 331 associated with customer-captured MPPAC 231. In some embodiments, customer-captured MPPAC identifier assessment unit 352 of MPPAC identifier assessment unit 350 performs the customer-captured MPPAC identifier assessment by comparing the customer-captured MPPAC identifier 331 provided from customer-captured MPPAC assessment unit 330 to merchant audit dynamic MPPAC identifier 382 for a dynamic MPPAC 381 (or a merchant audit static MPPAC identifier 372 for a static MPPAC 371 generated at MPPAC generation unit 360). In some embodiments, when customer-captured MPPAC identifier assessment unit 352 determines that customer-captured MPPAC identifier 331 matches with merchant audit dynamic MPPAC identifier 382 (or a merchant audit static MPPAC identifier 372 for a static MPPAC 371), merchant MPPAC audit verification system 150 provides a notification to customer 261 via customer smartphone 230 indicating that the customer-captured MPPAC (e.g., MPPAC 252 of MPPAC display 250) is a valid MPPAC (e.g., non-fraudulent MPPAC) and may be utilized for a financial or other type of MPPAC-based transaction associated with the customer-captured MPPAC. In some embodiments, when MPPAC identifier assessment unit 350 determines that customer-captured MPPAC identifier 331 does not match with merchant audit dynamic MPPAC identifier 382 (or a merchant audit static MPPAC identifier 372 for a static MPPAC 371), merchant MPPAC audit verification system 150 provides a notification to customer 261 via customer smartphone 230 indicating that the customer-captured MPPAC 231 (e.g., MPPAC 252 of MPPAC display 250) is not a valid MPPAC (e.g., fraudulent) and is not authorized for an MPPAC-based transaction, thereby preventing a fraudulent MPPAC-based transaction.

In some embodiments, MPPAC assessment unit 390 of merchant MPPAC audit verification system 150 may be configured to perform a dynamic MPPAC verification of a dynamic merchant-captured MPPAC 241 or customer-captured MPPAC 231. For example, in some embodiments, for a dynamic MPPAC (e.g., dynamic MPPAC 381 provided to merchant smartphone 240 as MPPAC 361 and displayed on MPPAC display 250), merchant MPPAC audit verification system 150 may perform a dynamic MPPAC verification (utilized in a merchant MPPAC audit verification for a merchant-captured MPPAC 241 or a customer-based MPPAC verification for a customer-captured MPPAC 231). In some embodimens, as part of the dynamic MPPAC verification, merchant MPPAC audit verification system 150 decodes the Base64-encoded merchant-captured MPPAC 241 or customer-captured MPPAC 231 (e.g., BASE64Decode(kAAAABI0AAAAUK0qMzXsxRdfVeM37nBABNhKfwmcao3I2RleLmrNtE Mj)='90000000123400000050ad2a3335ecc5175f55e337ee704004d84a7f099c6a8dc8d9195e2e6 acdb44323').

In some embodiments, after decoding the Base64-encoded merchant-captured MPPAC 241 or customer-captured MPPAC 231, merchant MPPAC audit verification system 150 extracts the serial number from the merchant-captured MPPAC 241 or customer-captured MPPAC 231 to retrieve the seed value (e.g., Seed value '0123456789ABCDEF'). In some embodiments, after merchant MPPAC audit verification system 150 extracts the serial number from the merchant-captured MPPAC 241 or customer-captured MPPAC 231 to retrieve the seed value, merchant MPPAC audit verification system 150 performs an increment only counter value assessment. In some embodiments, as part of the increment only counter value assessment, merchant MPPAC audit verification system 150 determines whether the increment only counter value associated with the merchant-captured MPPAC 241 or customer-captured MPPAC 231 (e.g., Increment Only Counter value = '00000050') is greater than a previous serial number (e.g., a previous value of the serial number utilized by merchant MPPAC audit verification system 150). In some embodiments, when merchant MPPAC audit verification system 150 determines that the incremental only counter value is greater than the previous serial number, the value is saved by merchant MPPAC audit verification system 150 as the most recent and greatest value for increment only counter value associated with the serial number. In some embodiments, when merchant MPPAC audit verification system 150 determines that the incremental only counter value is not greater than the previous serial number, the value is not saved by merchant MPPAC audit verification system 150 as the most recent and greatest value for increment only counter value associated with the serial number.

In some embodiments, after performing the increment only counter value assessment, merchant MPPAC audit verication system 150 prepares input data and performs a serial-number-based concatenation (e.g., Serial Number('900000001234') ∥ Increment Only Counter ('00000050') ∥ Seed ('0123456789ABCDEF')). In some embodiments, after performing the serial-based concatenation, merchant MPPAC audit verication system 150 executes a one-way function on the input data (e.g., SHA256('900000001234000000500123456789ABCDEF') = 'ad2a3335ecc5175f55e337ee704004d84a7f099c6a8dc8d9195e2e6acdb44323'). In some embodiments, the one-way function may be a SHA256 one-way function. In some embodiments, after executing the one-way function, merchant MPPAC audit verification system 150 compares the result of the one-way function execution to the result of the decoded Base64-encoded merchant-captured MPPAC 241 (e.g., compares 'ad2a3335ecc5175f55e337ee704004d84a7f099c6a8dc8d9195e2e6acdb44323' to '90000000123400000050ad2a3335ecc5175f55e337ee704004d84a7f099c6a8dc8d9195e2e6acdb 44323'). In some embodiments, when merchant MPPAC audit verification system 150 determines that the result of the one-way function execution is embedded in the result of the decoded Base64-encoded merchant-captured MPPAC 241, the merchant-captured MPPAC 241 is considered a valid, non-fraudulent MPPAC and may be utilized by customer 261 in a payment transaction. In some embodiments, when merchant MPPAC audit verification system 150 determines that the result of the one-way function execution is not embedded in the result of the decoded Base64-encoded merchant-captured MPPAC 241, the merchant-captured MPPAC 241 is considered invalid and regarded as a fraudulent MPPAC and may not be utilized by customer 261 in a payment transaction.

In some embodiments, in addition to receiving customer-captured MPPAC 231 and merchant-captured MPPAC 241, merchant MPPAC audit verification system 150 (via merchant and customer digital photo assessment unit 340) receives a merchant-captured digital photo 242 from merchant smartphone 240 and a customer-captured digital photo 232 from customer smartphone 230. In some embodiments, merchant and customer digital photo assessment unit 340 is executable code configured to perform a digital photo assessment of merchant-captured digital photo 242 and customer-captured digital photo 232. In some embodiments, merchant-captured digital photo 242 is a digital photo of a merchant location associated with merchant 271 captured by merchant 271 utilizing merchant smartphone 240 that is provided to merchant and customer digital photo assessment unit 340. In some embodiments, customer-captured digital photo 232 is a digital photo of a location of MPPAC 252 captured by customer 261 utilizing customer smartphone 230 that is provided to merchant and customer digital photo assessment unit 340. In some embodiments, merchant and customer digital photo assessment unit 340 performs the digital photo assessment by comparing a customer-captured digital photo location associated with the customer-captured digital photo 232 with a merchant-captured digital photo location associated with merchant-captured digital photo 242. In some embodiments, a merchant-captured digital photo location is a location of merchant 271 associated with the merchant-captured digital photo 242, such as, for example, a merchant premise and/or geolocation of merchant 271. In some embodiments, customer-captured digital photo location is a location of MPPAC 252 and customer 261 associated with the customer-captured digital photo 232, such as, for example, a customer premise and/or geolocation of customer 261. In some embodiments, merchant-captured digital photo 242 and customer-captured digital photo 232 may include metadata, such as, for example, an Exchangeable Image File Format (EXIF) that includes geolocation information. In some embodiments, the EXIF may include a digital signature included by merchant smartphone 240 or customer smartphone 230. In some embodiments, the digital signature may be used to verify the EXIF or confirm that the merchant-captured digital photo 242 has not been tampered with. In some embodiments, in order to ascertain the customer-captured digital photo location, the customer-captured digital photo 232 may provide similar location information as the location information provided by merchant-captured digital photo 242.

In some embodiments, when, as part of the digital photo assessment, merchant and customer digital photo assessment unit 340 determines that the customer-captured digital photo location does not match with the merchant-captured digital photo location, merchant and customer digital photo assessment unit 340 does not allow MPPAC-based transactions to occur using the displayed MPPAC 252 located at the customer-captured digital photo location and notifies customer 261 and merchant 271 that any MPPAC 252 related transaction will not occur until MPPAC 252 is replaced with a valid MPPAC. In some embodiments, when, as part of the digital photo assessment for a MPPAC display 250 located at the location of merchant 271, merchant and customer digital photo assessment unit 340 determines that the customer-captured digital photo location does match with the merchant-captured digital photo location, merchant and customer digital photo assessment unit 340 allow an MPPAC-based transaction to occur using the displayed MPPAC 252 located at the customer-captured digital photo location and notifies customer 261 and merchant 271 that the associated MPPAC 252 is non-fraudulent and MPPAC 252 does not currently require replacement. In some embodiments, merchant MPPAC audit verification system 150 may provide merchant-captured digital photo 242 to customer 261 for use by customer 261 to verify the merchant premise or location of merchant 271 associated with the MPPAC 252. In some embodiments, customer 261 may download and view the merchant location associated with merchant-captured digital photo 242 to visually perform the verification of merchant 271.

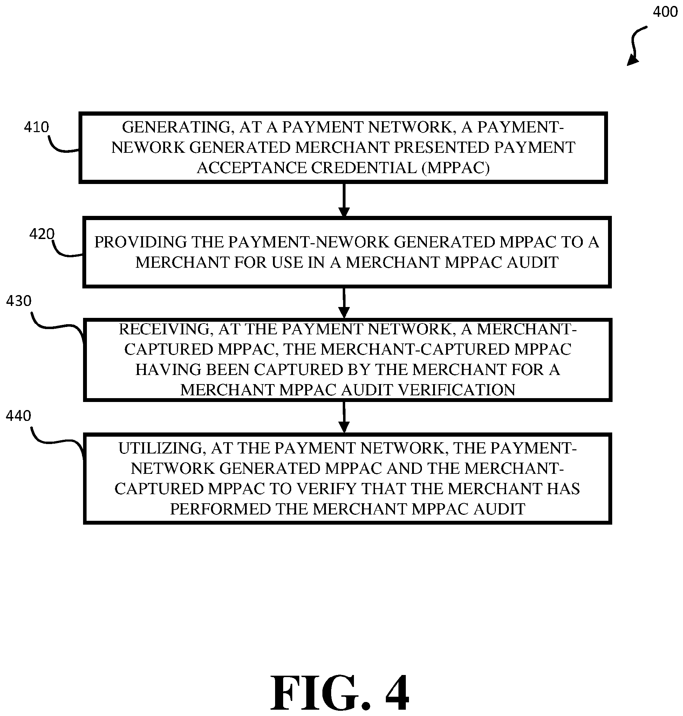

FIG. 4 illustrates a merchant MPPAC audit verification method 400 in accordance with some embodiments. In some embodiments, the merchant MPPAC audit verification method 400 is configured to verify that a merchant has performed an audit of an MPPAC displayed by merchant 271 on MPPAC display 250. In some embodiments, the merchant MPPAC audit verification method 400 is executed by merchant MPPAC audit verification system 150. The method, process steps, or stages illustrated in FIG. 4 may be implemented as an independent routine or process, or as part of a larger routine or process. Note that each process step or stage depicted may be implemented as an apparatus that includes a processor executing a set of instructions, a method, or a system, among other embodiments. In some embodiments, merchant MPPAC audit verification method 400 is described with reference to FIG. 1 - FIG. 4.

In some embodiments, with reference to FIGS. 1-4, at operation 410, MPPAC generation unit 360 of payment network 220 generates MPPAC 361. In some embodiments, at operation 420, MPPAC generation unit 360 of payment network 220 provides MPPAC 361 to merchant 271 via merchant smartphone 240. In some embodiments, as stated previously, MPPAC 361 is configured to be utilized by merchant MPPAC audit verification system 150 for merchant MPPAC audit verification. In some embodiments, at operation 430, MPPAC assessment unit 390 of payment network 220 receives merchant-captured MPPAC 241 from merchant smartphone 240. In some embodiments, the merchant-captured MPPAC 241 may be utilized by merchant 271 to perform a merchant MPPAC audit verification. In some embodiments, at operation 440, merchant MPPAC audit verification system 150 of payment network 220 utilizes MPPAC 361 and merchant-captured MPPAC 241 to verify that merchant 271 has performed an audit of the MPPAC displayed by merchant 271 on MPPAC display 250.

In some embodiments, MPPAC identifier (e.g., merchant audit static MPPAC identifier 372 and/or merchant audit dynamic MPPAC identifier 382) may include merchant MPPAC audit verification information (e.g., a merchant MPPAC audit verification tag (e.g., a numercial or alphanumerical tag)) that is configured to indicate to merchant MPPAC audit verification system 150 that a merchant MPPAC audit is being performed by merchant 271 and that the merchant MPPAC audit verification system 150 is to execute a merchant MPPAC audit verification.

In some embodiments, MPPAC identifier (e.g., merchant audit static MPPAC identifier 372 and/or merchant audit dynamic MPPAC identifier 382) may include customer-based MPPAC verification information (e.g., a customer-based MPPAC verification tag (e.g., a numercial or alphanumerical tag)) that is configured to indicate to merchant MPPAC audit verification system 150 that a customer-based MPPAC verification is being initiated and requested by customer 261 and that the merchant MPPAC audit verification system 150 is to execute a customer-based MPPAC verification.

In some embodiments, merchant MPPAC audit verification system 150 serves as an improvement over other computer systems by, for example, optimizing the authentication and transaction process, thereby reducing the need for additional equipment required for enhancing security and reducing fraud risks. In some embodiments, by evaluating and utilizing the streamlined approach provided by merchant MPPAC audit verification system 150, merchant MPPAC audit verification system 150 minimizes inefficiencies and potential vulnerabilities, leading to more efficient resource management and data processing. The improvement provided by the merchant MPPAC audit verification system 150 fosters increased system reliability and better compliance with security standards, contributing to overall system enhancements.

In some embodiments, merchant MPPAC audit verification system 150 may be configured to perform the merchant MPPAC audit verification utilizing an NFC Data Exchange Format (NDEF) - based MPPAC. For example, merchant MPPAC audit verification system 150 may be configured to utilize an NFC tag to perform the merchant MPPAC audit verification. In some embodiments, the NFC tag may be displayed on a display configured to hold or embed the NFC tag. In some embodiments, the NFC tag may be displayed on the display such that merchant MPPAC audit verification system 150 is able to execute the merchant MPPAC audit verification utilzing the NFC tag. In some embodiments, the NFC tag may be scanned by merchant 271 utilizing an NFC reader. In some embodiments, the NFC reader provides, in addition to standard NFC tag transactional information provided in traditional NFC tag transactions, merchant MPPAC audit verification information (e.g., a merchant MPPAC audit verification tag (e.g., a numercial or alphanumerical tag)) that is configured to indicate to merchant MPPAC audit verification system 150 that a merchant MPPAC audit is being performed by merchant 271 and that the merchant MPPAC audit verification system 150 is to execute a merchant MPPAC audit verification.

In some embodiments, a computer-implemented method includes generating, at a payment network, a payment-network-generated Merchant Presented Payment Acceptance Credential (MPPAC), the payment-network-generated MPPAC being configured to be utilized in a merchant MPPAC audit of a merchant; providing the payment-network-generated MPPAC to the merchant for use in the merchant MPPAC audit; receiving, at the payment network, a merchant-captured MPPAC, the merchant-captured MPPAC having been captured by the merchant for a merchant MPPAC audit verification; and utilizing, at the payment network, the payment-network-generated MPPAC and the merchant-captured MPPAC to perform the merchant MPPAC audit verification.

In some embodiments, the computer-implemented method further includes performing, as part of the merchant MPPAC audit verification, a MPPAC identifier assessment of the payment-network-generated MPPAC and the merchant-captured MPPAC.

In some embodiments of the computer-implemented method, as part of the MPPAC identifier assessment, an MPPAC identifier comparison is performed at the payment network.

In some embodiments of the computer-implemented method, as part of the MPPAC identifier comparison, a merchant-captured MPPAC identifier associated with the merchant-captured MPPAC is compared to a payment-network-generated MPPAC identifier associated with the payment-network-generated MPPAC.

In some embodiments of the computer-implemented method, when, as an MPPAC identifier comparison result of the MPPAC identifier comparison, the merchant-captured MPPAC identifier and the payment-network-generated MPPAC identifier do not match, the merchant is notified to perform the merchant MPPAC audit.

In some embodiments of the computer-implemented method, the merchant-captured MPPAC identifier is a merchant-captured MPPAC URL and the payment-network-generated MPPAC identifier is a payment-network-generated MPPAC URL.

In some embodiments of the computer-implemented method, the merchant-captured MPPAC identifier is a merchant-captured MPPAC string and the payment-network-generated MPPAC identifier is a payment-network-generated MPPAC string.

In some embodiments of the computer-implemented method, the payment-network-generated MPPAC is a dynamic the payment-network-generated MPPAC.

In some embodiments, a system includes a processor; and a non-transitory computer readable medium coupled to the processor, the non-transitory computer readable medium including code that: generates, at a payment network, a payment-network-generated Merchant Presented Payment Acceptance Credential (MPPAC), the payment-network-generated MPPAC being configured to be utilized in a merchant MPPAC audit of a merchant; provides the payment-network-generated MPPAC to the merchant for use in the merchant MPPAC audit; receives, at the payment network, a merchant-captured MPPAC, the merchant-captured MPPAC having been captured by the merchant for a merchant MPPAC audit verification; and utilizes, at the payment network, the payment-network-generated MPPAC and the merchant-captured MPPAC to perform the merchant MPPAC audit verification.

In some embodiments, the system further includes code that: performs, as part of the merchant MPPAC audit verification, a MPPAC identifier assessment of the payment-network-generated MPPAC and the merchant-captured MPPAC.

In some embodiments of the system, as part of the MPPAC identifier assessment, an MPPAC identifier comparison is performed at the payment network.

In some embodiments, the system further includes code that: as part of the MPPAC identifier comparison, a merchant-captured MPPAC identifier associated with the merchant-captured MPPAC is compared to a payment-network-generated MPPAC identifier associated with the payment-network-generated MPPAC.

In some embodiments, the system further includes code that: when, as an MPPAC identifier comparison result of the MPPAC identifier comparison, the merchant-captured MPPAC identifier and the payment-network-generated MPPAC identifier do not match, notifies the merchant to perform the merchant MPPAC audit.

In some embodiments of the system, the merchant-captured MPPAC identifier is a merchant-captured MPPAC URL and the payment-network-generated MPPAC identifier is a payment-network-generated MPPAC URL.

In some embodiments of the system, the merchant-captured MPPAC identifier is a merchant-captured MPPAC string and the payment-network-generated MPPAC identifier is a payment-network-generated MPPAC string.

In some embodiments of the system, the payment-network-generated MPPAC is a dynamic the payment-network-generated MPPAC.

In some embodimens, a method includes generating, at a payment network, a dynamic merchant-captured Merchant Presented Payment Acceptance Credential (MPPAC), the dynamic MPPAC being configured to be utilized for a dynamic MPPAC audit verification; providing the dynamic MPPAC to a merchant; receiving, at the payment network, a merchant-captured dynamic MPPAC; and utilizing the dynamic MPPAC and the merchant-capture dynamic MPPAC to perform a dynamic MPPAC audit verification, the dynamic MPPAC audit verification being configured to verify that the merchant has performed an MPPAC audit.

In some embodiments of the method, as part of the dynamic MPPAC audit verification, a dynamic MPPAC code comparison is utilized to validate a dynamic MPPAC code associated with the dynamic MPPAC.

In some embodiments of the method, upon validation of the dynamic MPPAC audit verification, the payment network utilizes a merchant premise photo provided by the merchant to allow a customer to verify the merchant.

In some embodiments of the method, the payment network verifies the merchant for the customer by comparing a digital photo of a merchant premise taken by the customer to the merchant premise photo provided by the merchant.

## Claims

1. A computer-implemented method, comprising:
generating (410), at a payment network (220), a payment-network-generated Merchant Presented Payment Acceptance Credential (MPPAC) (361), the payment-network-generated MPPAC (361) being configured to be utilized in a merchant MPPAC audit of a merchant (271);
providing (420) the payment-network-generated MPPAC (361) to the merchant (271) for use in the merchant MPPAC audit;
receiving (430), at the payment network (220), a merchant-captured MPPAC (241), the merchant-captured MPPAC (241) having been captured by the merchant (271) for a merchant MPPAC audit verification; and
utilizing (440), at the payment network (220), the payment-network-generated MPPAC (361) and the merchant-captured MPPAC (241) to perform the merchant MPPAC audit verification.

2. The computer-implemented method of claim 1, further comprising:
performing, as part of the merchant MPPAC audit verification, a MPPAC identifier assessment of the payment-network-generated MPPAC (361) and the merchant-captured MPPAC (241).

3. The computer-implemented method of claim 2, wherein:
as part of the MPPAC identifier assessment, an MPPAC identifier comparison is performed at the payment network (220).

4. The computer-implemented method of claim 3, wherein:
as part of the MPPAC identifier comparison, a merchant-captured MPPAC identifier (321) associated with the merchant-captured MPPAC (241) is compared to a payment-network-generated MPPAC identifier (372, 382) associated with the payment-network-generated MPPAC (361).

5. The computer-implemented method of claim 4, wherein:
when, as an MPPAC identifier comparison result of the MPPAC identifier comparison, the merchant-captured MPPAC identifier (321) and the payment-network-generated MPPAC identifier (372, 382) do not match, the merchant (271) is notified to perform the merchant MPPAC audit.

6. The computer-implemented method of claim 5, wherein:
the merchant-captured MPPAC identifier (321) is a merchant-captured MPPAC URL and the payment-network-generated MPPAC identifier (372, 382) is a payment-network-generated MPPAC URL.

7. The computer-implemented method of claim 5, wherein:
the merchant-captured MPPAC identifier (321) is a merchant-captured MPPAC string and the payment-network-generated MPPAC identifier (372, 382) is a payment-network-generated MPPAC string.

8. The computer-implemented method of any of claims 1 to 7, wherein:
the payment-network-generated MPPAC (361) is a dynamic payment-network-generated MPPAC (381).

9. A computer-implemented method, comprising:
generating, at a payment network, a dynamic merchant-captured Merchant Presented Payment Acceptance Credential (MPPAC) (381), the dynamic MPPAC (381) being configured to be utilized for a dynamic MPPAC audit verification;
providing the dynamic MPPAC (381) to a merchant (271);
receiving, at the payment network (220), a merchant-captured dynamic MPPAC (241); and
utilizing the dynamic MPPAC (381) and the merchant-captured dynamic MPPAC (241) to perform a dynamic MPPAC audit verification, the dynamic MPPAC audit verification being configured to verify that the merchant (271) has performed an MPPAC audit.

10. The method of claim 17, wherein:
as part of the dynamic MPPAC audit verification, a dynamic MPPAC code comparison is utilized to validate a dynamic MPPAC code associated with the dynamic MPPAC (381).

11. The method of claim 18, wherein:
upon validation of the dynamic MPPAC audit verification, the payment network (220) utilizes a merchant premise photo provided by the merchant (271) to allow a customer (261) to verify the merchant (271).

12. The method of claim 19, wherein:
the payment network (220) verifies the merchant (271) for the customer (261) by comparing a digital photo of a merchant (271) premise taken by the customer (261) to the merchant (271) premise photo provided by the merchant (271).

13. A system (100), comprising:
a processor (102); and
a non-transitory computer readable medium (104, 105) coupled to the processor (102), the non-transitory computer readable medium (104, 105) including code for performing the method of any of claims 1 to 12.

14. A computer program product comprising instructions which, when executed by a computer (100), cause the computer (100) to perform the method of any of claims 1 to 12.
